# EUROPÄISCHE PATENTSCHRIFT

(11) **EP 3 879 164 B1**
(45) Veröffentlichungstag und Bekanntmachung des Hinweises auf die Patenterteilung: **14.10.2026**
(21) Anmeldenummer: 20161757.8
(22) Anmeldetag: 09.03.2020
(51) Int. Cl.: F17C 5/06, F17C 13/02

(54) **BEFÜLLVORRICHTUNG UND VERFAHREN ZUM BEFÜLLEN**
METHOD AND DEVICE FOR FILLING
DISPOSITIF DE REMPLISSAGE ET PROCÉDÉ DE REMPLISSAGE

(43) Veröffentlichungstag der Anmeldung: 15.09.2021
(73) Patentinhaber: NPROXX B.V., 6422 RK Heerlen (NL)
(72) Erfinder: Kronholz, Stephan, 52428 Jülich (DE); Schmidt, Dirk, 41065 Mönchengladbach (DE)
(74) Vertreter: Heuking Kühn Lüer Wojtek PartGmbB

(56) Entgegenhaltungen:
- WO-A2-2014/082709
- DE-A1- 102016 009 672
- FR-A1- 3 079 908
- JP-A- 2019 173 762
- US-A1- 2014 332 114
- US-A1- 2019 301 678

## Beschreibung

Die Erfindung betrifft eine Befüllvorrichtung zum Befüllen diverser Behälter mit gasförmigen Stoffen. Weiterhin betrifft die Erfindung ein Verfahren zum Befüllen von Behältern mittels einer Befüllvorrichtung.

In den letzten Jahren ist das Interesse an der Verwendung alternativer Brennstoffe in der Fahrzeugindustrie enorm gestiegen. Aus diesem Grund kommen immer mehr Kraftfahrzeuge, die durch gasförmige Kraftstoffe wie Erdgas, Autogas oder Wasserstoff angetrieben werden, auf den Markt. Dabei handelt es sich nicht nur um Personenkraftwagen, sondern auch um Lastwagen und Fahrzeuge des öffentlichen Nahverkehrs, wie beispielsweise Busse oder Schienenfahrzeuge. Mit der wachsenden Anzahl der Fahrzeuge, die mit gasförmigen Brennstoffen betrieben werden, muss auch die Anzahl der Tankstellen wachsen, um den Bedarf zu decken. Da vor allem bei Wasserstoff tankstellen einerseits sehr hohe Drücke und niedrige Temperaturen herrschen, andererseits Wasserstoff in Verbindung mit Sauerstoff hoch explosiv ist, sind an diese hohen Anforderungen zu stellen. Ferner muss an Tankstellen die Sicherheit bei der Befüllung der Fahrzeuge und das nacheinander Befüllen diverser Behälter gewährleistet werden.

In der Richtlinie SAE TIR J 2601 wird die Tankprozedur von wasserstoffbetriebenen Fahrzeugen beschrieben. Demnach wird zunächst die Kommunikationsfähigkeit des zu befüllenden Fahrzeuges bzw. dessen Wasserstoffbehälters festgestellt. Hierbei unterscheidet man Fahrzeuge, die über ein elektronisches Interface diverse Parameter, wie bspw. Druck und Temperatur des Wasserstoffs im Behälter des Verbrauchers an die Tankstelle kommunizieren, und Fahrzeuge die nicht über Elektronik kommunizieren, sondern den Druck im Behälter durch eine Druckabfrage, also aufbringen eines Drucks auf das Gesamtsystem, an die Tankstelle weitergeben. Danach wird durch die Wasserstofftankstelle ein Druckstoß ausgeführt. Durch diesen Druckstoß werden alle Rückschlagventile geöffnet, so dass ein Druckaustausch zwischen dem Kraftfahrzeug und der Tankstelle durchgeführt werden kann. Dieser Druckstoß entspricht der Druckabfrage für nicht elektronisch kommunizierende Kraftfahrzeuge. Aufgrund des Druckaustausch stellt sich der Startdruck für die Betankung des jeweiligen Fahrzeugs ein. Im Anschluss wird zunächst ein Leckagetest des Systems durchgeführt, um die Sicherheit zu gewährleisten. Danach beginnt die Füllprozedur, deren Parameter, insbesondere der Fülldruck rampenförmig in Abhängigkeit des Startdrucks gewählt wird. Dabei bedient man sich heutzutage üblicherweise der Durchschnitts-Druckanstiegsraten-Methode, welche abhängig von der Starttemperatur und des Startdrucks eine Druckanstiegsrate (max. 60 g Wasserstoff/s) bestimmt, so dass die Fülldauer abhängig von der Tankgröße ist.

Daher ergibt sich, dass der Druckstoß zu Beginn des Befüllvorgangs unabdingbar ist, um zum einen das System befüllbereit zu machen und zum anderen um den Befüllvorgang überhaupt beginnen zu können. Demnach ist besonders wichtig, dass die Befüllvorrichtung in jedem Zustand in der Lage sein muss den für die Befüllung notwendigen Druckstoß aufbringen zu können.

Aus der DE 10 2015 016 327 A1 ist eine Tankstelle zur Befüllung von Speicherbehältern von Kraftfahrzeugen mit einem gasförmigen Brennstoff bekannt. Diese sieht mehrere Druckspeicher, insbesondere Konstantdruckspeicher, vor, die einen konstanten Druck aufweisen. Bei dem Tank- bzw. Befüllvorgang wird der gasförmige Brennstoff über eine Gaskonditioniereinheit und eine Zapfsäule abgegeben. Während des Befüllvorgangs wird der Druck in dem einen oder in mehreren Konstantdruckspeichern konstant gehalten, indem eine Flüssigkeit aus einem Flüssigkeitsspeicher, der den flüssigen Brennstoff aufweist, in den einen oder in mehrere Konstantdruckspeicher gefördert wird.

Aus Dokument JP 2019-173762 A ist ein Verfahren zur Diagnose eines Manometers eines Wasserstoff-Füllsystems und ein Verfahren zur Kalibrierung eines Manometers eines Wasserstoff-Füllsystems bekannt. Insbesondere wird ein Verfahren zur Diagnose eines Versagens einer Vielzahl von Druckmessern, die in einem Strömungsweg eines Wasserstoff-Treibstoffs von einem Akkumulator zu einer Zapfsäule angeordnet sind, beschrieben. Eine Wasserstofftankstelle weist einen mehrstufigen Speicher mit einer Vielzahl von Speichern auf, die auf einen hohen Druck komprimierten Wasserstofftreibstoff speichern.

Das Dokument US 2014/332114 A1 offenbart ein Verfahren zum Zuführen eines Gases zu einem Tank und einer Gasversorgungsvorrichtung und insbesondere einen Tank und zusätzlich eine Gasflasche, die für eine Impulsfüllung verwendet wird. Aus den Parametern Außenlufttemperatur zum Zeitpunkt der Impulsfüllung und einer Druckanstiegsrate des Fülldrucks wird ein Schätzwert für das Volumen des zu befüllenden Tanks bestimmt.

Dokument DE 10 2016 009 672 A1 offenbart eine Wasserstofftankstelle mit zwei Druckbehältern, wobei einer der zwei Druckbehälter als Hochdruckspeichertank ausgeführt ist und zur schnellen Betankung verwendet wird.

Dokument US 2019/301678 A1 offenbart ebenfalls eine Gastankstelle mit mehreren Druckbehältern, wobei zumindest einer der Druckbehälter ein Hochdruckbehälter ist.

Dokument WO 2014/82709 A2 offenbart ein Verfahren zur Durchführung eines Druck- und Dichtheitstests vor einem Betanken eines Speicherbehälters mit einem unter Druck stehendem, gasförmigen Medium, insbesondere Wasserstoff, bei dem ein Gaspufferspeicher, in dem das zum Betanken zu verwendende Medium gespeichert ist, über ein erstes Ventil mit einem ein Rohrleitungsvolumen begrenzenden Rohrleitungsabschnitt verbunden ist, der über ein zweites Ventil und eine nachfolgende Tankzuleitung mit dem Speicherbehälter verbunden ist, wobei vor dem Betanken bei geöffnetem ersten und geschlossenem zweiten Ventil das Rohrleitungsvolumen auf einen vordefinierten Initialdruck mit Medium bzw. Wasserstoff aus dem Gaspufferspeicher bedrückt wird, sodann das erste Ventil geschlossen und das zweite Ventil geöffnet wird, so dass lediglich in dem Rohrleitungsvolumen befindliches Medium bzw. Wasserstoff ein Tankventil des Speicherbehälters aufdrückt und in den Speicherbehälter strömt. Der vordefinierte Initialdruck ist dabei auf den Druckwert, auf den die jeweilige Betankung durchgeführt wird, anpassbar.

Die aus dem Stand der Technik bekannten Druckbehälter können somit ohne eine konstante Befüllung aus einem Speichertank den benötigten Druck für den Druckstoß zu Beginn der Befüllprozedur nicht aufbringen. Sie benötigen immer einen Speichertank, Pumpen und Motoren zum Betrieben der Pumpen. Dies führt dazu, dass die Anlagen zum einen sehr groß werden und zum anderen mehr Equipment benötigen. Dabei bedeutet mehr Equipment nicht nur eine Erhöhung der Kosten oder des Instandhaltungsaufwands, sondern auch die Erhöhung möglicher Schwachstellen an denen es zu Gas- oder Flüssigkeitsaustritt kommen kann.

Bisher war es nicht möglich, Vorrichtungen zum Befüllen diverser Kraftfahrzeuge mit gasförmigen Brennstoffen zu Verfügung zu stellen, die ohne einen Speichertank und Pumpen auskommen und dennoch in der Lage sind, ständig den benötigten Druckstoß für die Befüllung zur Verfügung zu stellen.

Aufgabe der Erfindung ist es, eine Befüllvorrichtung mit einem vereinfachten und kostensparenden Aufbau anzugeben, die die Anforderung an das Befüllen diverser Behälter erfüllt. Weiterhin ist es Aufgabe der Erfindung, eine Verfahren zu Befüllen eines Behälters mittels einer Befüllvorrichtung anzugeben.

Erfindungsgemäß wird diese Aufgabe durch eine Vorrichtung mit den Merkmalen des unabhängigen Anspruches 1 gelöst. Vorteilhafte Weiterbildung der Vorrichtung ergeben sich aus den Unteransprüchen 2 bis 8. Weiterhin wird die Aufgabe der Erfindung durch ein Verfahren gemäß Anspruch 9 gelöst. Vorteilhafte Weiterbildungen des Verfahrens ergeben sich aus den Unteransprüchen 10 bis 14.

Zunächst sei ausdrücklich darauf hingewiesen, dass im Rahmen der hier vorliegenden Patentanmeldung unbestimmte Artikel und Zahlenangaben wie "ein", "zwei" usw. im Regelfall als "mindestens"-Angaben zu verstehen sein sollen, also als "mindestens ein...", "mindestens zwei..." usw., sofern sich nicht aus dem jeweiligen Kontext ausdrücklich ergibt oder es für den Fachmann offensichtlich oder technisch zwingend ist, dass dort nur "genau ein...", "genau zwei..." usw. gemeint sein können. Weiterhin sind alle Zahlenangaben sowie Angaben zu Verfahrensparametern und/oder Vorrichtungsparametern im technischen Sinne zu verstehen, d.h. als mit den üblichen Toleranzen versehen zu verstehen. Auch aus der expliziten Angabe der Einschränkung "wenigstens" oder "mindestens" o.ä. darf nicht geschlossen werden, dass bei der einfachen Verwendung von "ein", also ohne die Angabe von "wenigstens" o.ä., ein "genau ein" gemeint ist.

Eine Befüllvorrichtung zum Befüllen diverser Behälter, insbesondere diverser Behälter in Fahrzeugen, mit gasförmigen Stoffen, insbesondere Wasserstoff, umfasst mindestens einen Vorratsbehälter, mindestens eine Rohrleitung und eine Steuerungseinrichtung. Behälter sind in diesem Zusammenhang beispielsweise Druckbehälter zur Speicherung von Wasserstoff oder anderer gasförmiger Brennstoffe unter einem Druck höher als der Atmosphärendruck, die in oder an einem Verbraucher angeordnet sind. Als Verbraucher werden hier insbesondere Fahrzeuge verstanden, dabei kann es sich um Kraftfahrzeuge wie Personenkraftwagen, aber auch um Kraftfahrzeuge für den öffentlichen Nahverkehr, wie beispielsweise Busse, handeln. Ebenso sind aber auch andere Fahrzeuge wie beispielsweise Schienenfahrzeuge oder Schiffe denkbar. Ein gasförmiger Stoff muss dabei nicht gasförmig vorliegen. Vielmehr soll unter dem Begriff "gasförmig" auch ein verflüssigtes Gas verstanden werden. Je nach Druck und Temperatur können Gase auch flüssig vorliegen, wobei sie bei Änderung der entsprechenden Parameter wieder in die Gasphase übergehen können. Der Vorratsbehälter der Befüllvorrichtung speichert den gasförmigen Brennstoff für die Befüllung der diversen Behälter. Während eines Befüllmodus stellt die mindestens eine Rohrleitung die Verbindung des zu befüllenden Behälters mit dem Vorratsbehälter her, so dass die Befüllung des Behälters durchgeführt werden kann. Die Steuerungseinrichtung stellt dabei sowohl die Steuerung der Ventile der mindestens einen Rohrleitung als auch die Ermittlung der Drücke im Gesamtsystem fest und wählt die Befüllrampe zur sicheren Befüllung des jeweiligen Verbrauchers. Die Befüllrampe stellt dabei den Druck- und/oder Volumenstromverlauf des in den Behälter strömenden Stoffes dar. Ferner steuert die Steuerungseinrichtung auch die Ausführung des zum Start der Befüllung notwenigen Druckstoßes bei einem maximalen Betriebsdruck, wobei der maximale Betriebsdruck dem maximalen Druck entspricht, mit dem die Befüllvorrichtung den Behälter befüllt.

Die Ausführung des Druckstoßes dient dabei der Öffnung mindestens aller verbraucherseitigen Rückschlagventile. Dies führt zum Druckausgleich in dem Gesamtsystem, um den Startdruck für die Befüllung zu ermitteln. Dieser Startdruck ist insbesondere vom Restfüllgrad, d.h. insbesondere dem aktuell herrschenden Innendruck des zu befüllenden Behälters abhängig. Der maximale Betriebsdruck kann je nach Anwendung beispielsweise zwischen 200 und 1200 bar betragen.

Um eine Ausführung des Druckstoß sicherstellen zu können, ist bei der erfindungsgemäßen Lösung der Gedanke wesentlich, dass die Befüllvorrichtung, unabhängig vom Druck im Vorratsbehälter, kurzfristig den maximalen Betriebsdruck für den Druckstoß zur Verfügung stellen können muss. Dafür sieht die erfindungsgemäße Lösung vor, dass die Befüllvorrichtung weiterhin eine Druckflasche enthaltend einen gasförmigen Stoff unter mindestens einem maximalen Betriebsdruck aufweist, wobei die Druckflasche mit dem Behälter wirkverbindbar ist. Dabei kann die Druckflasche beispielsweise direkt in der Rohrleitung zwischen dem Vorratsbehälter und dem zu befüllenden Behälter oder in einer By-Pass-Rohrleitung angeordnet sein. Unter Druckflasche ist dabei jede Form von Druckbehälter zu verstehend, der geeignet ist, den gasförmigen Stoff unter mindestens dem maximalen Betriebsdruck zu speichern. Eine derartige Druckflasche stellt die Durchführung des Druckstoßes über einen längeren Zeitraum sicher, da während des Druckstoßes lediglich kurzeitig eine geringe Menge gasförmigen Stoffs bei dem maximalen Betriebsdruck in das System einströmt, um alle Rückschlagventile zu öffnen und einen Druckaustausch bzw. Druckausgleich zwischen dem Vorratsbehälter und dem zu befüllenden Behälter herzustellen. Die Druckflasche kann dabei den gasförmigen Stoff auch bei einem höheren Druck als dem maximalen Betriebsdruck enthalten, wobei der Druck für den Druckstoß auf den maximalen Betriebsdruck eingestellt werden kann, sofern der Innendruck in der Druckflasche mindestens diesem maximalen Betriebsdruck entspricht. Unter dem maximalen Betriebsdruck ist in dieser Schrift der maximale Betriebsdruck zu verstehen, mit dem die Befüllvorrichtung einen Behälter befüllt.

Sowohl der Vorratsbehälter als insbesondere auch die Druckflasche können für einen höheren Innendruck ausgelegt sein und auch den gasförmigen Stoff unter höherem Innendruck als dem maximalen Betriebsdruck enthalten. Durch die erfindungsgemäße Befüllvorrichtung ist ein Befüllen mehrerer diverser Behälter nacheinander auch bei sinkenden Druck im Vorratsbehälter durch diverse Befüllvorgänge sichergestellt, was beispielsweise bei Bustankstellen vorteilhaft ist, da diese beispielsweise bis zu 10 Busse pro Schicht befüllen müssen, wobei ein Tausch des Vorratsbehälters unter der Schicht nachteilig ist. Ferner ist eine derartige Druckflasche einfach austauschbar ohne dass dieser Austausch den Vorratsbehälter beeinflusst, wodurch die Sicherstellung des Druckstoßes unabhängig vom Füllstand des Vorratsbehälters durchführbar ist.

In einer vorteilhaften Ausgestaltung ist in der Befüllvorrichtung ein Kühlaggregat zur Kühlung des gasförmigen Stoffs vorgesehen. Diese stellt die Kühlung des gasförmigen Stoffs vor und während des Befüllvorgangs sicher.

Besonders vorteilhaft für die Befüllvorrichtung ist es, wenn der Vorratsbehälter zum Speichern von gasförmigen Stoffen, insbesondere Wasserstoff, bei 200 bis 1200 bar, bevorzugt bei 200 bar bis 1000 bar, insbesondere bei 500, 700, 900 oder 1000 bar, ausgelegt ist. Dies erhöht die Sicherheit zur Lagerung und Speicherung des gasförmigen Stoffs. Dabei können die Größe und die benötigte Drucksicherheit je nach Anwendung variieren und angepasst werden. Demnach ist bei Ausnutzung der gewählten Druckfestigkeit sichergestellt, dass die benötigte Menge an gasförmigen Stoff, insbesondere Wasserstoff, zur Verfügung steht.

Um den Druckstoß sicherstellen zu können, ist es besonders vorteilhaft, wenn die Druckflasche gasförmigen Stoff, insbesondere Wasserstoff, mit nahezu dem maximalten Betriebsdruck bereitstellt, insbesondere einem Druck von 500, 700, 900 oder 1000 bar.

Dabei ist es weiterhin vorteilhaft, dass mindestens eine zweite Druckflasche vorgesehen ist. Diese kann im Falle, dass die erste Druckflasche den benötigten maximalen Betriebsdruck unterschreitet oder aus anderen Gründen den Druckstoß nicht ausführen kann, angesteuert werden, um den Druckstoß auszuführen. Dies gewährleistet eine kontinuierliche Betankung diverser Behälter. Dabei können die erste oder zweite Druckflasche auch im Wechsel durch die Steuerungseinrichtung angesteuert werden, um einen gleichmäßigen Verbrauch zu erhalten. Dabei ist es vorteilhaft, wenn die mindestens eine bzw. die zweite Druckflasche einen Drucksensor aufweisen, der mit der Steuerungseinrichtung in Verbindung steht.

Die Befüllvorrichtung und der zu befüllende Behälter sind über die mindestens eine Rohrleitung miteinander wirkverbunden. Zur Erhöhung der Sicherheit bei der Befüllung mit gasförmigen Stoffen, muss diese Verbindung formschlüssig und vor allem nach außen hin gasdicht sein. Dafür weist die Rohrleitung in einer vorteilhaften Ausführungsform ein rohrleitungsseitiges Füllkupplungsventil auf, dass im Befüllmodus mit einem verbraucherseitigen Füllkupplungsventil des zu befüllenden Behälters wirkverbunden ist.

In einer weiteren vorteilhaften Ausführungsform weist der mindestens eine Vorratsbehälter ein Volumen von 25 - 100 m³, vorzugsweise von 25 - 90 m³, besonders vorzugsweise von 30 - 45 m³, auf. Die Größe des mindestens einen Vorratsbehälters kann an die Art der Verbraucher, beispielsweise Busse oder PKW, oder auch an die Lage der Befüllvorrichtung angepasst werden. Dabei ist unter Lage nicht nur die örtlichen Gegebenheit, sondern auch die Anzahl der zu betankenden Fahrzeuge zu verstehen, also wie viele Befüllvorgänge in einem bestimmten Zeitbereich bis zum Austausch oder der Befüllung des oder der Vorratsbehälter durchgeführt werden müssen, um die Verfügbarkeit dem Bedarf anpassen zu können. So sollte beispielsweise der Vorratsbehälter einer Bustankstelle so ausgelegt sein, dass zumindest 10 Busse pro Schicht betankt werden können.

In einer weiteren vorteilhaften Ausführungsform sind der mindestens eine Vorratsbehälter, die Steuerungseinrichtung, die mindestens eine Rohrleitung und die mindestens eine Druckflasche in einem vorgefertigten Rahmengestell oder in einem Container platziert. Dies ermöglicht eine mobile Lagerung der Befüllvorrichtung, die auf einfache Art und Weise an ihren Bestimmungsort gebracht werden kann. Dabei ist es besonders vorteilhaft, wenn es sich bei dem Container um einen ISO-Container mit der Größe 20' oder 40' oder 45'HC handelt.

Die Erfindung betrifft des Weiteren ein Verfahren zum Befüllen eines Behälters gemäß Anspruch 9.

Die Ausführung des Druckstoßes in Schritt 2) dient dabei der Öffnung aller Rückschlagventile, was nicht nur eine Fluidverbindung zwischen dem Vorratsbehälter und dem zu befüllenden Behälter herstellt, sondern auch zum Druckausgleich in dem Gesamtsystem führt, um den Startdruck für die Befüllung zu ermitteln. Der sich an den Druckstoß anschließende Leckagetest wird bei dem ermittelten bzw. sich einstellenden Startdruck für ca. 20 sec durchgeführt. Währenddessen wählt die Steuerungseinrichtung die vom Startdruck abhängige Befüllrampe aus. Diese ist auf der Steuerungseinrichtung hinterlegt und folgt beispielsweise der Durchschnitts-Druckanstiegsraten Methode gemäß der SAE TIR J 2601. Diese Methode ist nicht nur sicher, sondern lässt auch Füllzeiten von 3 bis 5 min zu.

In der vorteilhaften Ausgestaltung beträgt der maximale Betriebsdruck zur Ausführung des Druckstoßes 200 bis 1200 bar, bevorzugt 500, 700, 900 oder 1000 bar bei einer Temperatur von -45°C bis 80°C. Der maximale Betriebsdruck kann dabei von dem Vorratsbehälter zur Verfügung gestellt werden. Zusätzlich oder alternativ kann der maximale Betriebsdruck durch die Druckflasche bereitgestellt werden.

Für eine erhöhte Sicherheit des Verfahrens ist besonders vorteilhaft, wenn zur Verbindung der Rohrleitung mit dem zu befüllenden Behälter ein rohrleitungsseitiges Füllkupplungsventil mit einem verbraucherseitigen Füllkupplungsventil wirkverbunden wird.

In einer weiteren vorteilhaften Ausgestaltung des Verfahrens werden die Daten, über die der Startdruck ermittelt wird, über ein elektronisches Interface zwischen dem rohrleitungsseitigen und dem verbraucherseitigen Füllkupplungsventil ausgetauscht. Ferner werden diese an die Steuerungseinrichtung der Befüllvorrichtung weitergeleitet und von dieser ausgewertet, um die weiteren Schritte durchführen zu können.

Des Weiteren ist besonders vorteilhaft, wenn in dem erfindungsgemäße Verfahren der Startdruck durch den Druckstoß zur Druckabfrage ermittelt wird. Dabei gibt es Fahrzeuge, die nicht über ein elektronisches Interface mit der Befüllvorrichtung kommunizieren. Bei solchen Fahrzeugen erhält die Steuerungsvorrichtung der Befüllvorrichtung die benötigten Informationen über den Druck aus Druckabfrage. Jedoch ist es auch mögliche, eine derartige Druckabfrage bei Fahrzeugen durchzuführen, die ein elektronisches Interface vorsehen. Dies ist besonders wichtig, wenn das elektronische Interface fehlerhaft ist, so dass auch hier eine fehlerfreie Befüllung des zu befüllenden Behälters ermöglicht wird.

In einer weiteren Ausgestaltung des Verfahrens wird nach dem Befüllen eines Behälters direkt im Anschluss ein weiterer Behälter befüllt.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

### Es zeigen

- Fig. 1: eine schematische Darstellung einer erfindungsgemäßen Befüllvorrichtung im Befüllmodus;
- Fig. 2: eine schematische Darstellung einer ersten Ausführungsform des erfindungsgemäßen Verfahrens bei der Befüllung eines ersten Behälters (Fig.2a) und 2b)) und eines weiteren Behälters (Fig.2c)) und 2d));
- Fig. 3: eine schematische Darstellung einer weiteren Ausführungsform des erfindungsgemäßen Verfahrens bei der Befüllung eines ersten Behälters (Fig.3a) und 3b)) und eines weiteren Behälters (Fig.3c)) und 3d));
- Fig. 4: Darstellung eines Diagramms einer Befüllprozedur.

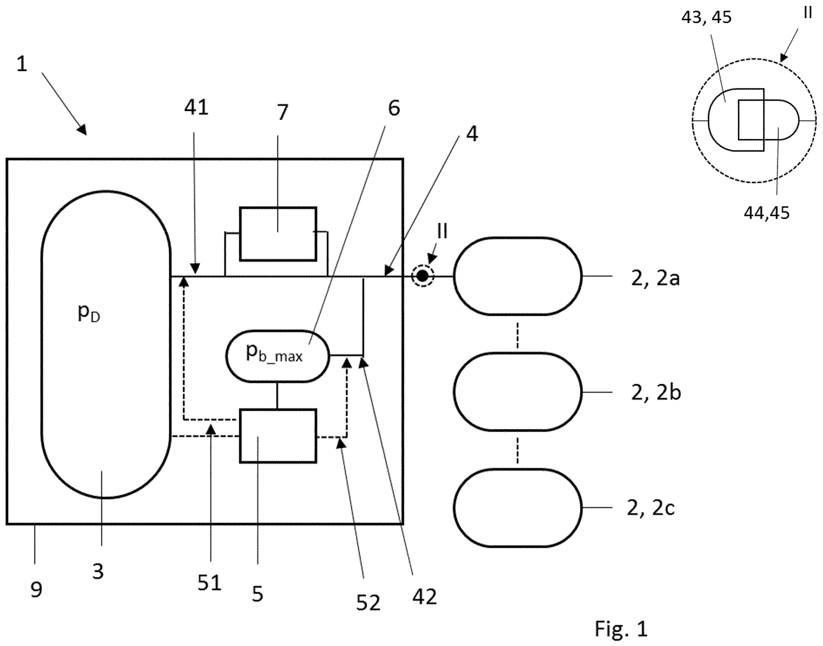

In den **Fig. 1 bis 3** zeigen durchgezogene Linien zwischen den Komponenten eine durchgeschaltete, d.h. bestehende Verbindung an, durch die der gasförmige Stoff strömen kann, während die gestrichelten Linien zwischen den Komponenten mögliche Verbindungen, die nicht aber nicht geschaltet sind, anzeigen.

**Fig. 1** zeigt die Befüllvorrichtung 1 zum Befüllen eines Behälters 2 im Befüllmodus. Die Befüllvorrichtung 1 weist einen Vorratsbehälter 3 zum Speichern von Wasserstoff, mindestens eine Rohrleitung 4 für den Transport des Wasserstoffs, eine Steuerungseinrichtung 5 zum Steuern der Befüllvorrichtung 1 und mindestens eine Druckflasche 6, sowie ein Kühlaggregat 7 auf. Um für die Befüllung des Behälters genügend Wasserstoff zu Verfügung stellen zu können, wird dieser stark komprimiert gelagert. Der Vorratsbehälter ist so ausgelegt, dass er Wasserstoff bei 200 bis 1200 bar lagern kann. Dabei ist besonders die Lagerung bei 500, 700, 900 oder 1000 bar wichtig. Dabei weist der Vorratsbehälter 3 ein Volumen von 30 m³ auf. Jedoch kann der Vorratsbehälter 3 im Allgemeinen auch ein Volumen von 25 - 100 m³ aufweisen.

Die Rohrleitung 4 weist hier eine Vorratsbehälter-Rohrleitung 41, die den Verbraucher 2 mit dem Vorratsbehälter 3 verbindet, und eine Druckflaschen-Rohrleitung 42, die den Behälter 2 mit der Druckflasche 6 verbindet, auf. Die Vorratsbehälter-Rohrleitung 41 weist, wie in Ausschnitt II gezeigt, ein rohrleitungsseitiges Füllkupplungsventil 43 auf, das auf das verbraucherseitige Füllkupplungsventil 44 gesteckt ist, um eine formschlüssige und gasdichte Verbindung herzustellen.

Um den Befüllvorgang beginnen zu können, muss zunächst ein Druckstoß 8 durchgeführt werden. Bei diesem Druckstoß 8 wird kurzeitig der maximale Betriebsdruck p_{b_max} in das System eingebracht, um alle Rückschlagventile zu öffnen. Dieser Druckstoß 8 wird bei dem maximalen Betriebsdruck p_{b_max} durch die Druckflasche 6 über die Druckflaschen-Rohrleitung 42 in das System eingebracht. Dabei gibt es zum einen die Möglichkeit, den Druckstoß 8 bei jedem Befüllvorgang über den Vorratsbehälter 3 zu erzeugen und zum anderen bei einem geringen Druck im Vorratsbehälter 3 den Druckstoß 8 über die Druckflasche 6 sicher zu stellen.

Aus diesem Grund weist die Druckflasche 6 gasförmigen Stoff, insbesondere Wasserstoff, bei einem maximalen Betriebsdruck p_{b_max} von 800 bis 1200 bar und einer Temperatur von -45°C bis 80°C auf. Jedoch ist auch ein maximaler Betriebsdruck von 900 bar bis 1000 denkbar.

Um während des Befüllvorgangs den Wasserstoff, der vom Vorratsbehälter 3 über die Vorratsbehälter-Rohrleitung 41 in den ersten Behälter 2a transportiert wird **(****Fig. 1****),** kühlen zu können, ist hier das Kühlaggregat 7 vorgesehen.

Bei den in **Fig. 1** dargestellten Behältern 2, 2a, 2b, 2c wird der Druckstoß 8 über die Druckflasche 6 ausgeführt, Die Behälter 2, 2a, 2b, 2c kommunizieren über eine Druckabfrage mit der Steuerungseinrichtung 5. Sobald die Verbindung zwischen der Befüllvorrichtung 1 und dem Behälter hergestellt ist, löst die Steuerungseinrichtung 5 über die Druckflaschen-Verbindung 52 den Druckstoß 8 aus. Anhand dieses Druckstoßes 8 ermittelt die Steuerungseinrichtung 5 den Startdruck pₛₜₐᵣₜ für den Befüllvorgang. Anschließend löst sie über die Vorratsbehälter-Verbindung 51 die Befüllung des angeschlossenen Behälters 2 aus.

Im der Ausführungsform gemäß **Fig. 1** ist die Befüllvorrichtung 1, also der mindestens eine Vorratsbehälter 3, die Steuerungseinrichtung 5, die mindestens eine Rohrleitung 4 und die mindestens eine Druckflasche 6 in einem Container 9 platziert. Dadurch ist die Befüllvorrichtung einfach zu transportieren und kann als mobile Einheit zum Einsatz kommen. Dabei ist es besonders einfach zu handhaben, wenn der Container 9 ein ISO-Container ist und der Vorratsbehälter 3 in seiner Größe an diesen angepasst ist.

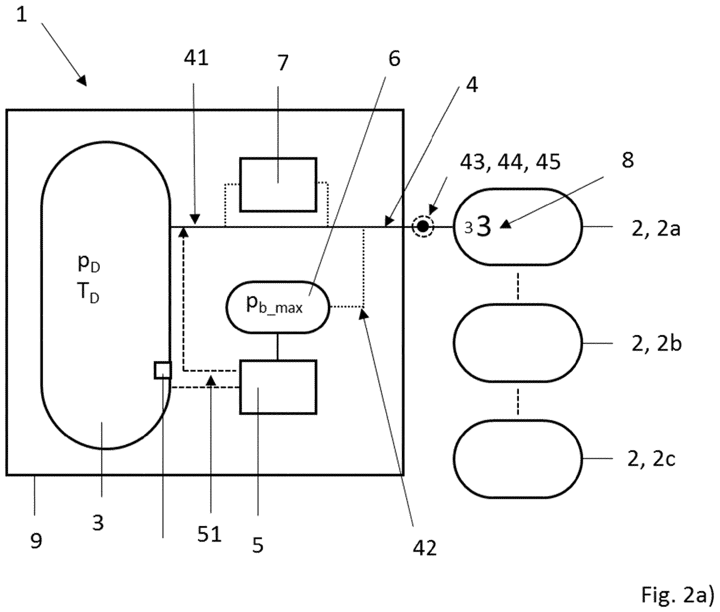

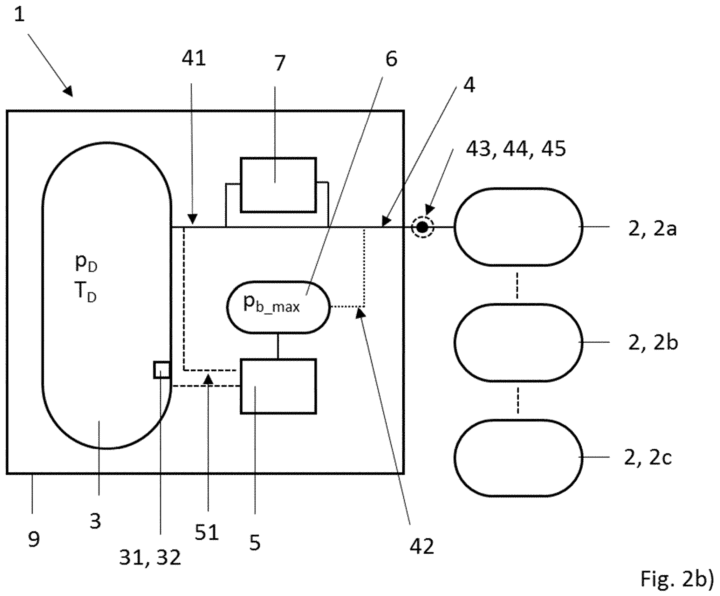

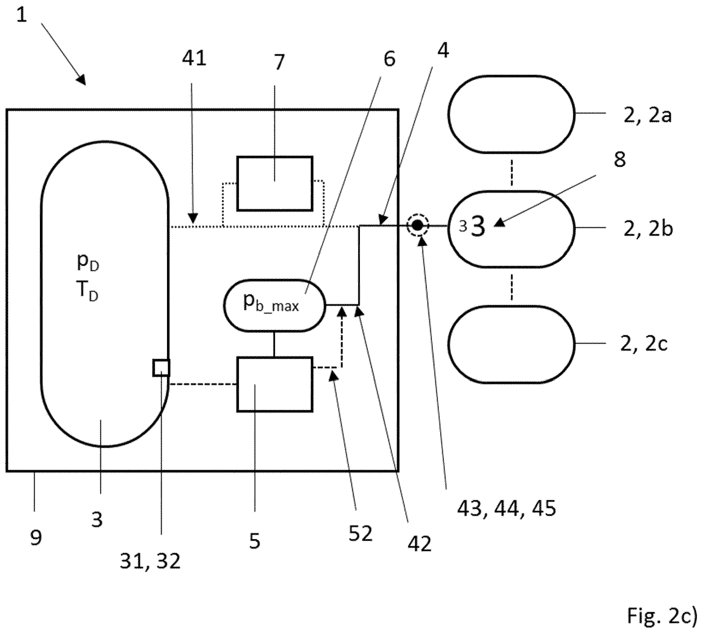

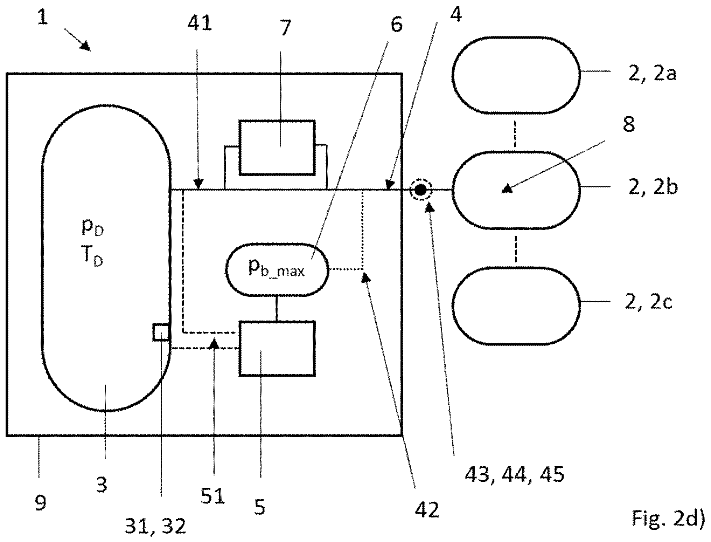

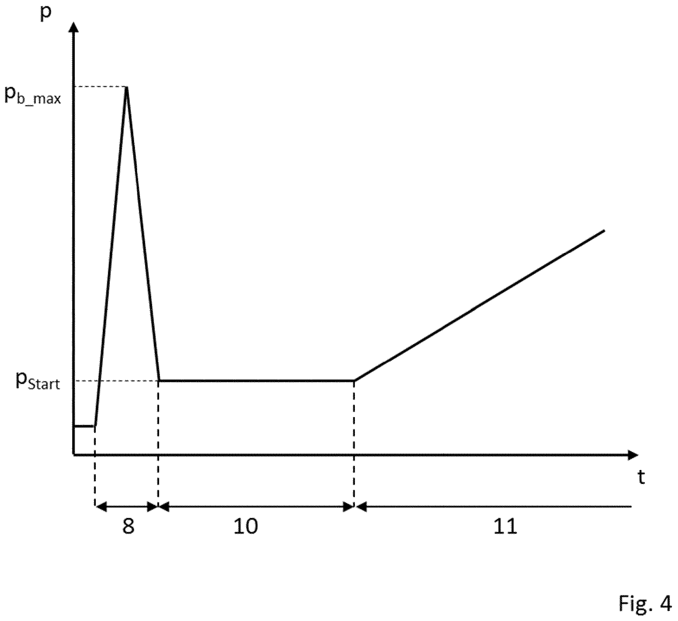

**Fig. 2** zeigt ein erstes Verfahren zur Befüllung eines Behälters 2 mit Wasserstoff mittels einer oben beschrieben Befüllvorrichtung. Dabei wird in einem Schritt 1 die Rohrleitung 4 der Befüllvorrichtung 1 mit einem ersten Behälter 2 verbunden. Zur sicheren Verbindung wird ein rohrleitungsseitiges Füllkupplungsventil 43 auf ein verbraucherseitiges Füllkupplungsventil 45 gesteckt. Der Vorratsbehälter weist hier Sensorik, also einen Drucksensor 31 und einen Temperatursensor 32, auf die über die Vorratsbehälter-Verbindung 51 mit der Steuerungseinrichtung 5 in Verbindung stehen, so dass zu jeder Zeit der Zustand des Vorratsbehälters 3 bekannt ist. Zum Ausführen eines Druckstoßes 8 in einem Schritt 2 wird zunächst der Druck p_{D} und die Temperatur T_{D} im Vorratsbehälter 3 mittels des Drucksensors 31 und des Temperatursensors 32 gemessen. Diese Daten werden dann durch die Steuerungseinrichtung 5 mit dem maximalen Betriebsdruck p_{b_max} verglichen. Ist der Druck p_{D} im Vorratsbehälter 3 größer als der maximale Betriebsdruck p_{b_max}, so steuert die Steuerungseinrichtung 5 die Vorratsbehälter-Rohrleitung 41 an, um den Druckstoß auszuführen (**Fig. 2a**)). Dabei liegt der maximale Betriebsdruck p_{b_max} bei 800 bis 1200 bar. Anhand der durch ein elektronisches Interface erhaltenen Daten über den Druck und die Temperatur im Behälter 2a ermittelt die Steuerungseinrichtung 5 den Startdruck pₛₜₐᵣₜ (Schritt 3) und führt bei dem Startdruck pₛₜₐᵣₜ einen Leckagetest 10 durch (Schritt 4). Anschließend oder währenddessen wählt die Steuerungseinrichtung 5 eine vom Startdruck pₛₜₐᵣₜ abhängige Befüllrampe 11, die in der Steuerungseinrichtung 5 hinterlegt ist, aus (Schritt 5) und befüllt den Behälter 2a nach dieser Befüllrampe 11 (Schritt 6), **Fig. 2b**) und **Fig. 4****.** Nach Abschluss des Befüllvorgangs schließt die Steuerungsvorrichtung 5 die Vorratsbehälter-Rohrleitung 41, so dass der Behälter 2a von der Befüllvorrichtung 1 entfernt werden kann.

Im Anschluss können direkt weitere Behälter 2b, 2c angeschlossen und befüllt werden. Gemäß **Fig. 2c**) ist ein weiterer Behälter 2b an die Befüllvorrichtung 1 angeschlossen. Zur Ausführung des Druckstoßes 8 wird die Messung des Drucks p_{D} des Vorratsbehälters 3 durchgeführt und mit dem maximalen Betriebsdruck p_{b_max} verglichen. Dabei stellt die Steuerungseinrichtung 5 fest, dass der Druck p_{D} im Vorratsbehälter 3 geringer ist als der maximale Betriebsdruck p_{b_max} und steuert die Druckflaschen-Rohrleitung 42 an, so dass die Druckflasche 6 den Druckstoß 8 ausführt (**Fig. 2c**)). Anschließend wird auch hier der Startdruck pₛₜₐᵣₜ ermittelt und der Leckagetest 10 durchgeführt, um die Befüllung anhand der gewählten Befüllrampe 11 auszuführen (**Fig. 2d**)).

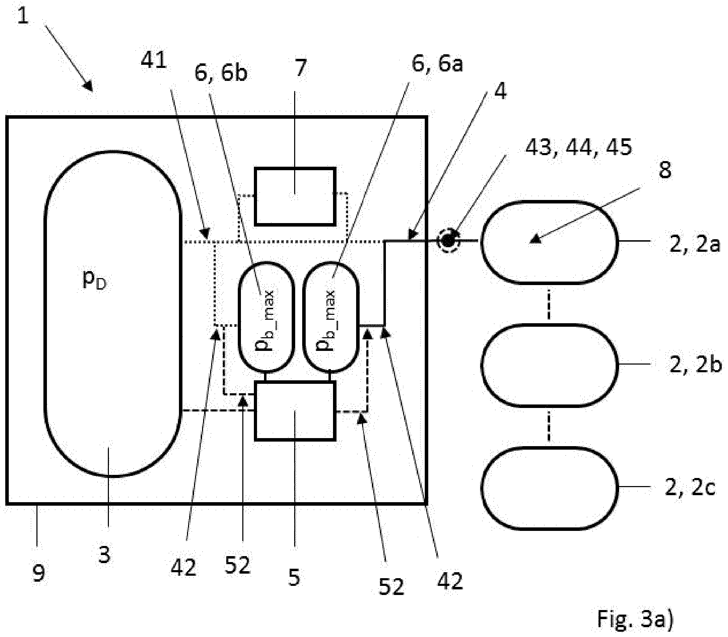

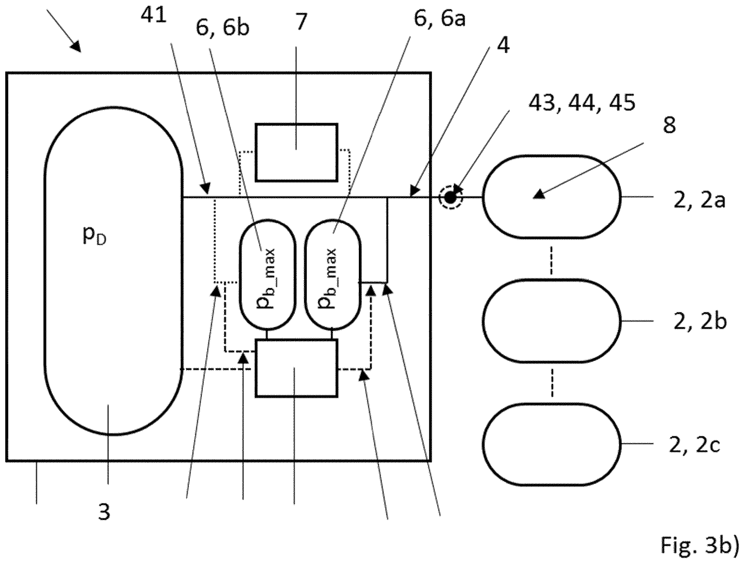

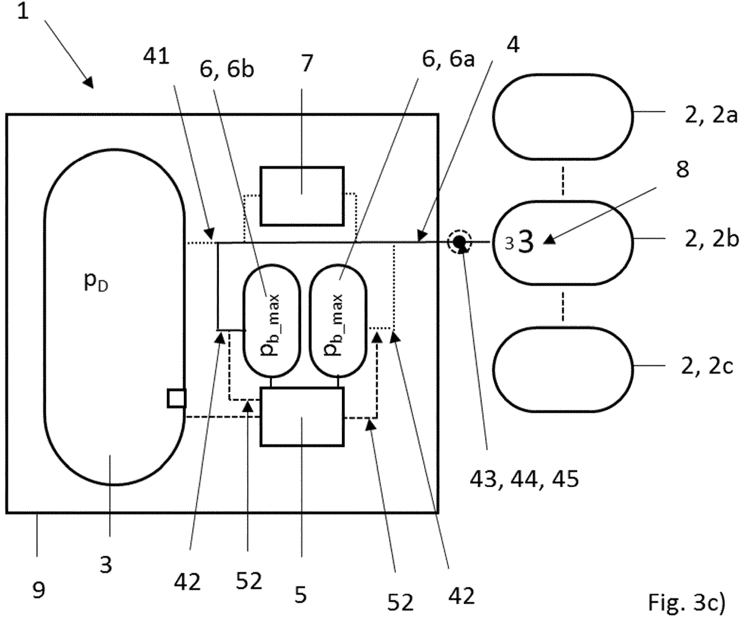

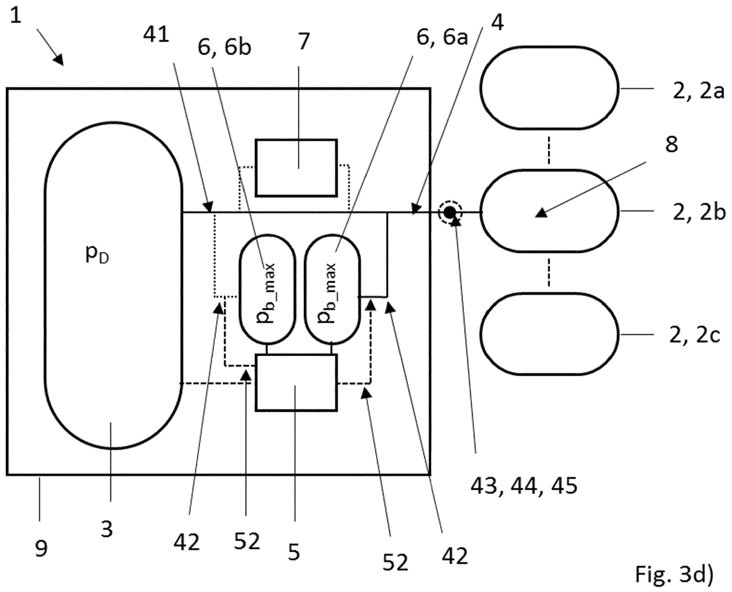

Das Ausführungsbeispiel des Verfahrens zum Befüllen eines Behälters mit Wasserstoff gemäß **Fig. 3** geht von einer Befüllvorrichtung 1 aus, die zwei Druckflaschen 6 zur Erzeugung des Druckstoßes 8 vorsieht. Die Druckflaschen 6 weisen jeweils einen maximalen Betriebsdruck p_{b_max} von 900 bar bis 1000 bar auf. Eine derartige Befüllvorrichtung 1 ist vor allem für den mobilen Einsatz in abgelegene Gebieten geeignet. Daher ist die Befüllvorrichtung mit ihrem 25 m³ Vorratsbehälter in einem 20' ISO Container untergebracht. Jedoch ist durchaus ein größerer Container und so auch ein größerer Vorratsbehälter 3 denkbar. Ferner ist sie in der Lage, Behälter 2, die mit einem elektronischen Interface 45 mit der Steuerungseinrichtung 5 kommunizieren, aber auch Behälter 2, die über Druckabfrage mit der Steuerungseinrichtung 5 kommunizieren, zu befüllen.

Die in **Fig.3** gezeigten Behälter 2, 2a, 2b, 2c kommunizieren via Druckabfrage mit dem Vorratsbehälter 3 der Befüllvorrichtung 1. Für den Befüllvorgang wird zunächst der Behälter 2 über sein verbraucherseitiges Füllkupplungsventil 44 mit dem rohrleitungsseitigen Füllkupplungsventil 43 mit der Rohrleitung 4 verbunden (Schritt 1). Im Anschluss wird mittels der ersten Druckflasche 6a über die Druckflaschen-Rohrleitung 42 der Druckstoß 8 ausgeführt, sodass die Rückschlagventile geöffnet werden (**Fig. 3a****)**). Anhand des Druckausgleichs ermittelt die Steuerungseinrichtung 5 den Startdruck pₛₜₐᵣₜ, führt den Leckagetest 10 aus und wählt die Befüllrampe 11 aus, um anschließend Behälter 2a zu befüllen (**Fig. 3b****)**).

Nach der Befüllung diverser Behälter 2 ist es möglich, dass die erste Druckflasche 6a den maximalen Betriebsdruck p_{b_max} für den Druckstoß nicht mehr aufbringt. Dann wird der Druckstoß 8 nach anschließen des Behälters 2b über die zweite Druckflasche 6b durchgeführt (**Fig. 3c****)**). Auch hier schließt sich die Ermittlung des Startdrucks pₛₜₐᵣₜ durch den Druckausgleich an (Schritt 3), so dass der Leckagetest 10 (Schritt 4) und die Befüllung des Verbrauchers mittels der Befüllrampe 11 (Schritt 5) durchgeführt werden kann, Fig. 3d).

Auch bei dem in **Fig. 3** beschriebenen Verfahren ist es nicht ausgeschlossen, dass die Befüllvorrichtung Druck- und Temperatursensoren 31, 32 vorsieht, um beispielsweise den Zustand des Vorratsbehälters 3 über die Steuerungseinrichtung 5 an gegebenenfalls eine Zentrale weitergeben zu können.

Das in **Fig. 4** gezeigte Diagramm ist eine vereinfachte Darstellung des Druckverlaufs einer Befüllprozedur über die Zeit mittels einer erfindungsgemäßen Befüllvorrichtung 1 und des erfindungsgemäßen Verfahrens. Dabei wird nach Anschluss des Behälters 2 an die Rohrleitung 4 des Vorratsbehälters 3 der Druckstoß 8 bei einem maximalen Betriebsdruck p_{b_max} durchgeführt. Der Druckstoß 8 kann dabei entweder durch über den Vorratsbehälter 3, sofern dessen Innendruck p_{D} größer oder gleich dem maximalen Betriebsdruck p_{b_max} ist, oder über eine der Druckflaschen 6, 6a, 6b durchgeführt werden. Der Druckstoß 8 wird mit dem maximalen Betriebsdruck p_{b_max} durchgeführt. Durch den Druckstoß 8 werden alle Rückschlagventile im Gesamtsystem geöffnet, so dass es zu einem Druckausgleich zwischen der Befüllvorrichtung 1 und dem angeschlossenen Behälter 2, 2a, 2b kommt. Der sich einstellende Druck ist der Startdruck pₛₜₐᵣₜ, der entweder vom elektronischen Interface 45 an die Steuerungseinrichtung 5 weitergegeben wird oder aufgrund der Druckabfrage von dieser selbst ermittelt wird. Bei dem Startdruck pₛₜₐᵣₜ wird dann der Leckagetest 10 für ca. 20sec durchgeführt. Fällt dieser negativ aus, also wird ein Leck festgestellt, wird die Befüllung abgebrochen. Wird kein Leck festgestellt, wird die Befüllung mittels einer Befüllrampe 11 durchgeführt. Die Befüllrampe 11 ist in der Steuerungseinrichtung 5 hinterlegt und ist abhängig von dem im System herrschenden Startdruck pₛₜₐᵣₜ. Aus Sicherheitsgründen folgt die Befüllrampe 11 der Durchschnitts-Druckanstiegsraten Methode, bei welcher der Druck langsam ansteigt. Dabei sollte eine Füllrate von 60 g H₂/s nicht überschritten werden.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst, sofern sie nicht von den nachfolgenden Ansprüchen abweichen.

### Bezugszeichenliste:

- 1: Befüllvorrichtung
- 2: Behälter
- 2a: erster Behälter
- 2b,2c: weitere Behälter
- 3: Vorratsbehälter
- 31: Drucksensor
- 32: Temperatursensor
- 4: Rohrleitung
- 41: Vorratsbehälter-Rohrleitung
- 42: Druckflaschen-Rohrleitung
- 43: rohrleitungsseitiges Füllkupplungsventil
- 44: verbraucherseitiges Füllkupplungsventil
- 45: elektronisches Interface
- 5: Steuerungseinrichtung
- 51: Vorratsbehälter-Verbindung
- 52: Druckflaschen-Verbindung
- 6: Druckflasche
- 6a: erste Druckflasche
- 6b: zweite Druckflasche
- 7: Kühlaggregat
- 8: Druckstoß
- 9: Container, Rahmengestell
- 10: Leckagetest
- 11: Befüllrampe
- p_{b_max}: maximalen Betriebsdruck
- p_{D}: Druck im Vorratsbehälter
- pₛₜₐᵣₜ: Startdruck
- T_{D}: Temperatur im Vorratsbehälter

## Patentansprüche

1. Befüllvorrichtung (1) zum Befüllen diverser Behälter (2, 2a, 2b), insbesondere von Behältern (2. 2a, 2b) in Fahrzeugen, mit gasförmigen Stoffen, insbesondere Wasserstoff, umfassend mindestens einen Vorratsbehälter (3), mindestens eine Rohrleitung (4) und eine Steuerungseinrichtung (5),
wobei die Befüllvorrichtung (1) weiterhin eine Druckflasche (6, 6a, 6b) enthaltend einen gasförmigen Stoff unter mindestens einem maximalen Betriebsdruck (p_{b_max}) aufweist, wobei der maximale Betriebsdruck (p_{b_max}) dem maximalen Druck entspricht, mit dem die Befüllvorrichtung (1) den Behälter (2, 2a, 2b) befüllt und wobei die Druckflasche (6, 6a, 6b) mit dem Behälter (2, 2a, 2b) wirkverbindbar ist,
wobei die Rohrleitung (4) eine Vorratsbehälter-Rohrleitung (41) zur Verbindung des Behälters (2) mit dem Vorratsbehälter (3) und eine Druckflaschen-Rohrleitung (42) zur Verbindung des Behälters (2) mit der Druckflasche (6) aufweist, und
wobei der Vorratsbehälter (3) eine Sensorik verbunden mit der Steuerungseinrichtung (5) umfasst, die dazu ausgestaltet sind,
- den Druck mittels eines Drucksensors (31) im Vorratsbehälter (3) zu messen und den Druck (p_{D}) im Vorratsbehälter (3) mit dem maximalen Betriebsdruck (p_{b_max}) zu vergleichen,
- die Rohrleitung (4, 41) anzusteuern, wenn der Druck (p_{D}) im Vorratsbehälter (3) größer ist als der maximale Betriebsdruck (p_{b_max}), und einen Druckstoß (8) bei maximalen Betriebsdruck (p_{b_max}) mittels gasförmigem Stoff unter Druck (p_{D}) aus dem Vorratsbehälter (3) auszuführen,
oder
- die Rohrleitung (4, 42) anzusteuern, wenn der Druck (p_{D}) im Vorratsbehälter (3) gleich oder geringer als der maximale Betriebsdruck (p_{b_max}), und einen Druckstoß (8) bei maximalen Betriebsdruck (P_{b_max}) mittels gasförmigem Stoff aus der Druckflasche (6) auszuführen,
wobei die Steuerungseinrichtung (5) dazu ausgestaltet ist, den Startdruck (pₛₜₐᵣₜ) für Befüllung des Behälters (2, 2a, 2b) zu ermitteln und einen Leckagetest (10) bei dem Startdruck (pₛₜₐᵣₜ) durchzuführen als auch eine Befüllrampe (11) zur Befüllung des Behälters (2, 2a, 2b) auszuwählen und das Befüllen des Behälters (2, 2a, 2b) mit gewählter Befüllrampe (11) aus dem Vorratsbehälter (3) über die Rohrleitung (4) zu steuern.

2. Befüllvorrichtung (1) gemäß Anspruch 1,
**dadurch gekennzeichnet,**
**dass** ein Kühlaggregat (7) zur Kühlung des gasförmigen Stoffs vorgesehen ist.

3. Befüllvorrichtung (1) gemäß Anspruch 1 oder 2,
**dadurch gekennzeichnet,**
der Vorratsbehälter (3) zum Speichern von gasförmigen Stoffen, insbesondere Wasserstoff, bei 200 bis 1200 bar, bevorzugt bei 200 bar bis 1000 bar, insbesondere bei 500, 700, 900 oder 1000 bar, ausgelegt ist.

4. Befüllvorrichtung (1) gemäß einem vorangehenden Ansprüche,
**dadurch gekennzeichnet,**
**dass** die Druckflasche (6, 6a, 6b) gasförmigen Stoff, insbesondere Wasserstoff, bei einem maximalen Betriebsdruck von 800 bis 1200 bar, bevorzugt bei 500, 700, 900 oder 1.000 bar, und einer Temperatur von -45°C bis 80°C aufweist.

5. Befüllvorrichtung (1) gemäß einem vorangehenden Ansprüche,
**dadurch gekennzeichnet,**
**dass** mindestens eine zweite Druckflasche (6, 6b) vorgesehen ist.

6. Befüllvorrichtung (1) gemäß einem vorangehenden Ansprüche,
**dadurch gekennzeichnet,**
**dass** die Rohrleitung (4) ein rohrleitungsseitiges Füllkupplungsventil (43) aufweist, dass im Befüllmodus mit einem verbraucherseitigen Füllkupplungsventil (44) des Behälters (2) wirkverbunden ist.

7. Befüllvorrichtung (1) gemäß einem vorangehenden Ansprüche,
**dadurch gekennzeichnet,**
**dass** der mindestens eine Vorratsbehälter (3) ein Volumen von 25 - 100 m³, vorzugsweise von 25 - 90 m³, besonders vorzugsweise von 30 - 45 m³, aufweist.

8. Befüllvorrichtung gemäß einem vorangehenden Ansprüche,
**dadurch gekennzeichnet,**
**dass** der mindestens eine Vorratsbehälter (3), die Steuerungseinrichtung (5), die mindestens eine Rohrleitung (4) und die mindestens eine Druckflasche (6, 6a, 6b) in einem vorgefertigten Rahmengestell oder in einem Container (9) angeordnet sind.

9. Verfahren zum Befüllen eines Behälters (2, 2a, 2b) mit einer Befüllvorrichtung (1) zum Befüllen diverser Behälter (2, 2a, 2b), insbesondere von Behältern (2. 2a, 2b) in Fahrzeugen, mit gasförmigen Stoffen, insbesondere Wasserstoff, umfassend mindestens einen Vorratsbehälter (3), mindestens eine Rohrleitung (4) und eine Steuerungseinrichtung (5), wobei die Befüllvorrichtung (1) weiterhin eine Druckflasche (6, 6a, 6b) enthaltend einen gasförmigen Stoff unter mindestens einem maximalen Betriebsdruck (pb_max) aufweist, wobei der maximale Betriebsdruck (pb_max) dem maximalen Druck entspricht, mit dem die Befüllvorrichtung (1) den Behälter (2, 2a, 2b) befüllt und wobei die Druckflasche (6, 6a, 6b) mit dem Behälter (2, 2a, 2b) wirkverbindbar ist, wobei die Rohrleitung (4) eine Vorratsbehälter-Rohrleitung (41) zur Verbindung des Behälters (2) mit dem Vorratsbehälter (3) und eine Druckflaschen-Rohrleitung (42) zur Verbindung des Behälters (2) mit der Druckflasche (6) aufweist, mit den Schritten
1) Verbinden der Rohrleitung (4) der Befüllvorrichtung (1) mit einem Behälter (2, 2a, 2b),
2) Ausführen eines Druckstoßes bei
a) Vorratsbehälter (3) mit Sensorik
i. Messen des Drucks mittels des Drucksensors (31) im Vorratsbehälter (3) und Vergleichen des Drucks (p_{D}) im Vorratsbehälter (3) mit dem maximalen Betriebsdruck (p_{b_max}),
ii. Ansteuern der Rohrleitung (4), insbesondere der Vorratsbehälter-Rohrleitung (41), wenn der Druck (p_{D}) im Vorratsbehälter (3) größer ist als der maximale Betriebsdruck (p_{b_max}), und Ausführen eines Druckstoßes (8) bei maximalen Betriebsdruck (p_{b_max}) mittels gasförmigem Stoff unter Druck (p_{D}) aus dem Vorratsbehälter (3), oder
iii. Ansteuern der Rohrleitung (4), insbesondere der Druckflaschen-Rohrleitung (42), wenn der Druck (p_{D}) im Vorratsbehälter (3) gleich oder geringer als der maximale Betriebsdruck (p_{b_max}), und Ausführen eines Druckstoßes (8) bei maximalen Betriebsdruck (p_{b_max}) mittels gasförmigem Stoff aus der Druckflasche (6),
oder
b) Vorratsbehälter 3 ohne Sensorik
iv. Ausführen eines Druckstoßes bei maximalen Betriebsdruck (p_{b_max}) mittels gasförmigem Stoff aus der Druckflasche (6),
3) Ermittlung des Startdrucks (pₛₜₐᵣₜ) für Befüllung des Behälters (2, 2a, 2b),
4) Durchführung eines Leckagetest (10) bei dem Startdruck (pₛₜₐᵣₜ),
5) Auswahl der Befüllrampe (11) zur Befüllung des Behälters (2, 2a, 2b),
6) Befüllen des Behälters (2, 2a, 2b) mit gewählter Befüllrampe (11) aus dem Vorratsbehälter (3) über die Rohrleitung (4).

10. Verfahren gemäß Anspruch 9,
**dadurch gekennzeichnet,**
**dass** der maximale Betriebsdruck (pb_max) von 800 bis 1200 bar, bevorzugt bei 900 bar bis 1000 bar, und einer Temperatur von -45°C bis 80°C beträgt.

11. Verfahren gemäß Anspruch 9 oder 10,
**dadurch gekennzeichnet,**
**dass** zur Verbindung der Rohrleitung (4) mit dem Behälter (2, 2a, 2b) ein rohrleitungsseitiges Füllkupplungsventil (43) mit einem verbraucherseitigen Füllkupplungsventil (44) wirkverbunden wird.

12. Verfahren gemäß einem der Ansprüche 9 bis 11,
**dadurch gekennzeichnet,**
**dass** über ein elektronische Interface (45) zwischen dem rohrleitungsseitigen Füllkupplungsventil (43) und dem verbraucherseitigen Füllkupplungsventil (44) Daten ausgetauscht werden, über die der Startdruck (pstart) ermittelt wird.

13. Verfahren gemäß einem der Ansprüche 9 bis 12,
**dadurch gekennzeichnet,**
**dass** der Startdruck (pstart) durch den Druckstoß (8) zur Druckabfrage ermittelt wird.

14. Verfahren gemäß einem der Ansprüche 9 bis 13,
**dadurch gekennzeichnet,**
**dass** nach dem Befüllen eines Behälters (2, 2a) direkt im Anschluss ein weiterer Behälter (2, 2b, 2c) befüllt wird.

## Claims

1. A filling device (1) for filling various containers (2, 2a, 2b), in particular containers (2, 2a, 2b) in vehicles, with gaseous substances, in particular hydrogen, comprising at least one storage container (3), at least one pipe (4) and a control device (5), wherein the filling device (1) furthermore has a pressure vessel (6, 6a, 6b) containing a gaseous substance under at least a maximum operating pressure (p_{b_max}), wherein the maximum operating pressure (p_{b_max}) corresponds to the maximum pressure, with which the filling device (1) fills the container (2, 2a, 2b) and wherein the pressure vessel (6, 6a, 6b) can be operatively connected to the container (2, 2a, 2b),wherein the pipe (4) has a storage container pipe (41) for connection of the container (2) to the storage container (3) and a pressure vessel pipe (42) for connection of the container (2) to the pressure vessel (6), and
wherein the storage container (3) comprises a sensor system connected to the control device (5), which are configured
- to measure the pressure by means of a pressure sensor (31) in the storage container (3) and to compare the pressure (p_{D}) in the storage container (3) to the maximum operating pressure (p_{b_max}),
- to control the pipe (4, 41) when the pressure (p_{D}) in the storage container (3) is larger than the maximum operating pressure (p_{b_max}), and to perform a pressure surge (8) at maximum operating pressure (p_{b_max}) by means of gaseous substance under pressure (p_{D}) from the storage container (3),
or
- to control the pipe (4, 42) when the pressure (p_{D}) in the storage container (3) is equal to or less than the maximum operating pressure (p_{b_max}), and to perform a pressure surge (8) at maximum operating pressure (p_{b_max}) by means of gaseous substance from the pressure vessel (6),
wherein the control device (5) is configured to determine the starting pressure (pₛₜₐᵣₜ) for filling the container (2, 2a, 2b) and to perform a leakage test (10) at the starting pressure (pₛₜₐᵣₜ) as well as to select a filling ramp (11) for filling the container (2, 2a, 2b) and to control the filling of the container (2, 2a, 2b) with selected filling ramp (11) from the storage container (3) via the pipe (4).

2. The filling device (1) according to claim 1,
**characterized in**
**that** a cooling unit (7) for cooling the gaseous substance is provided.

3. The filling device (1) according to claim 1 or 2,
**characterized in**
**that** the storage container (3) is designed to store gaseous substances, in particular hydrogen, at 200 to 1200 bar, preferably at 200 bar to 1000 bar, in particular at 500, 700, 900 or 1000 bar.

4. The filling device (1) according to any one of the preceding claims,
**characterized in**
**that** the pressure vessel (6, 6a, 6b) has gaseous substance, in particular hydrogen, at a maximum operating pressure of 800 to 1200 bar, preferably at 500, 700, 900 or 1,000 bar, and a temperature of -45 °C to 80 °C.

5. The filling device (1) according to any one of the preceding claims,
**characterized in**
**that** at least a second pressure vessel (6, 6b) is provided.

6. The filling device (1) according to any one of the preceding claims,
**characterized in**
**that** the pipe (4) has a pipe-side filling coupling valve (43), which, in the filling mode, is operatively connected to a consumer-side filling coupling valve (44) of the container (2).

7. The filling device (1) according to any one of the preceding claims,
**characterized in**
**that** the at least one storage container (3) has a volume of 25 - 100 m³, preferably of 25 - 90 m³, particularly preferably of 30 - 45 m³.

8. The filling device (1) according to any one of the preceding claims,
**characterized in**
**that** the at least one storage container (3), the control device (5), the at least one pipe (4) and the at least one pressure vessel (6, 6a, 6b) are arranged in a prefabricated frame or in a container (9).

9. A method for filling a container (2, 2a, 2b) with a filling device (1) for filling various containers (2, 2a, 2b), in particular containers (2, 2a, 2b) in vehicles, with gaseous substances, in particular hydrogen, comprising at least one storage container (3), at least one pipe (4) and a control device (5), wherein the filling device (1) furthermore has a pressure vessel (6, 6a, 6b) containing a gaseous substance under at least a maximum operating pressure (p_{b_max}), wherein the maximum operating pressure (p_{b_max}) corresponds to the maximum pressure, with which the filling device (1) fills the container (2, 2a, 2b) and wherein the pressure vessel (6, 6a, 6b) can be operatively connected to the container (2, 2a, 2b), wherein the pipe (4) has a storage container pipe (41) for connection of the container (2) to the storage container (3) and a pressure vessel pipe (42) for connection of the container (2) to the pressure vessel (6), with the steps of
1) connecting the pipe (4) of the filling device (1) to a container (2, 2a, 2b),
2) performing a pressure surge in the case of
a) storage container (3) with sensor system
i. measuring the pressure by means of the pressure sensor (31) in the storage container (3) and comparing the pressure (p_{D}) in the storage container (3) to the maximum operating pressure (p_{b_max}),
ii. controlling the pipe (4), in particular the storage container pipe (41), when the pressure (p_{D}) in the storage container (3) is larger than the maximum operating pressure (p_{b_max}), and performing a pressure surge (8) at maximum operating pressure (p_{b_max}) by means of gaseous substance under pressure (p_{D}) from the storage container (3), or
iii. controlling the pipe (4), in particular the pressure vessel pipe (42), when the pressure (p_{D}) in the storage container (3) is equal to or less than the maximum operating pressure (p_{b_max}), and performing a pressure surge (8) at maximum operating pressure (p_{b_max}) by means of gaseous substance from the pressure vessel (6),
or
b) storage container (3) without sensor system
iv. performing a pressure surge at maximum operating pressure (p_{b_max}) by means of gaseous substance from the pressure vessel (6),
3) determination of the starting pressure (pₛₜₐᵣₜ) for filling the container (2, 2a, 2b),
4) performance of a leakage test (10) at the starting pressure (pₛₜₐᵣₜ),
5) selection of the filling ramp (11) for filling the container (2, 2a, 2b),
6) filling the container (2, 2a, 2b) with selected filling ramp (11) from the storage container (3) via the pipe (4).

10. The method according to claim 9,
**characterized in**
**that** the maximum operating pressure (pb_max) is 800 to 1200 bar, preferably 900 bar to 1000 bar, and a temperature of -45 °C to 80 °C.

11. The method according to claim 9 or 10,
**characterized in**
**that** a pipe-side filling coupling valve (43) is operatively connected to a consumer-side filling coupling valve (44) for the connection of the pipe (4) to the container (2, 2a, 2b).

12. The method according to any one of claims 9 to 11,
**characterized in**
**that** data, via which the starting pressure (pstart) is determined, is exchanged via an electronic interface (45) between the pipe-side filling coupling valve (43) and the consumer-side filling coupling valve (44).

13. The method according to any one of claims 9 to 12,
**characterized in**
**that** the starting pressure (pstart) is determined by the pressure surge (8) for the pressure inquiry.

14. The method according to any one of claims 9 to 13,
**characterized in**
**that** after the filling of a container (2, 2a), a further container (2, 2b, 2c) is filled immediately afterwards.

## Revendications

1. Dispositif de remplissage (1) destiné au remplissage de divers réservoirs (2, 2a, 2b), notamment de réservoirs (2, 2a, 2b) dans des véhicules, avec des substances gazeuses, en particulier de l'hydrogène, comprenant au moins un réservoir de stockage (3), au moins une conduite (4) et un dispositif de commande (5),
le dispositif de remplissage (1) comprenant en outre une bouteille sous pression
(6, 6a, 6b) contenant une substance gazeuse sous au moins une pression maximale de fonctionnement (p_{b_max}), la pression maximale de fonctionnement (p_{b_max}) correspondant à la pression maximale avec laquelle le dispositif de remplissage (1) remplit le réservoir (2, 2a, 2b), et la bouteille sous pression (6, 6a, 6b) pouvant être reliée fonctionnellement au réservoir (2, 2a, 2b),
la conduite (4) comprenant une conduite de réservoir de stockage (41) destinée à relier le réservoir (2) au réservoir de stockage (3), ainsi qu'une conduite de bouteille sous pression (42) destinée à relier le réservoir (2) à la bouteille sous pression (6), et
le réservoir de stockage (3) comprenant un système de capteurs relié au dispositif de commande (5), configurées pour
- mesurer la pression dans le réservoir de stockage (3) au moyen d'un capteur de pression (31) et comparer la pression (p_{D}) dans le réservoir de stockage (3) avec la pression maximale de fonctionnement (p_{b_max}),
- commander la conduite (4, 41) lorsque la pression (p_{D}) dans le réservoir de stockage (3) est supérieure à la pression maximale de fonctionnement (p_{b_max}) et exécuter une impulsion de pression (8) à la pression maximale de fonctionnement (p_{b_max}) au moyen d'une substance gazeuse sous pression (p_{D}) provenant du réservoir de stockage (3),
ou
- commander la conduite (4, 42) lorsque la pression (p_{D}) dans le réservoir de stockage (3) est égale ou inférieure à la pression maximale de fonctionnement (p_{b_max}), et exécuter une impulsion de pression (8) à la pression maximale de fonctionnement (p_{b_max}) au moyen d'une substance gazeuse provenant de la bouteille sous pression (6),
le dispositif de commande (5) étant configuré pour déterminer la pression initiale (pₛₜₐᵣₜ) pour le remplissage du réservoir (2, 2a, 2b) et pour effectuer un test d'étanchéité (10) à la pression initiale (pₛₜₐᵣₜ), ainsi que pour sélectionner une rampe de remplissage (11) destinée au remplissage du réservoir (2, 2a, 2b) et pour commander le remplissage du réservoir (2, 2a, 2b) avec la rampe de remplissage (11) sélectionnée, à partir du réservoir de stockage (3) par la conduite (4).

2. Dispositif de remplissage (1) selon la revendication 1,
**caractérisé en ce que**
un groupe de refroidissement (7) est prévu pour refroidir la substance gazeuse.

3. Dispositif de remplissage (1) selon la revendication 1 ou 2,
**caractérisé en ce que**
le réservoir de stockage (3) est conçu pour stocker des substances gazeuses, en particulier de l'hydrogène, à une pression comprise entre 200 et 1200 bar, de préférence entre 200 et 1000 bar, en particulier à 500, 700, 900 ou 1000 bar.

4. Dispositif de remplissage (1) selon l'une des revendications précédentes,
**caractérisé en ce que**
la bouteille sous pression (6, 6a, 6b) comprend une substance gazeuse, en particulier de l'hydrogène, à une pression maximale de fonctionnement comprise entre 800 et 1200 bar, de préférence à 500, 700, 900 ou 1000 bar, et à une température comprise entre -45 °C et 80 °C.

5. Dispositif de remplissage (1) selon l'une des revendications précédentes,
**caractérisé en ce que**
au moins une deuxième bouteille sous pression (6, 6b) est prévue.

6. Dispositif de remplissage (1) selon l'une des revendications précédentes,
**caractérisé en ce que**
la conduite (4) comprend une vanne de raccord de remplissage côté conduite (43), qui, en mode de remplissage, est reliée fonctionnellement à une vanne de raccord de remplissage côté consommateur (44) du réservoir (2).

7. Dispositif de remplissage (1) selon l'une des revendications précédentes,
**caractérisé en ce que**
l'au moins un réservoir de stockage (3) présente un volume de 25 à 100 m³, de préférence de 25 à 90 m³, et plus particulièrement de 30 à 45 m³.

8. Dispositif de remplissage selon l'une des revendications précédentes,
**caractérisé en ce que**
l'au moins un réservoir de stockage (3), le dispositif de commande (5), l'au moins une conduite (4) et l'au moins une bouteille sous pression (6, 6a, 6b) sont disposés dans un bâti-cadre préfabriqué ou dans un conteneur (9).

9. Procédé de remplissage d'un réservoir (2, 2a, 2b) au moyen d'un dispositif de remplissage (1) destiné au remplissage de divers réservoirs (2, 2a, 2b), notamment de réservoirs (2, 2a, 2b) dans des véhicules, avec des substances gazeuses, en particulier de l'hydrogène, comprenant au moins un réservoir de stockage (3), au moins une conduite (4) et un dispositif de commande (5), le dispositif de remplissage (1) comprenant en outre une bouteille sous pression (6, 6a, 6b) contenant une substance gazeuse sous au moins une pression maximale de fonctionnement (p_{b_max}), la pression maximale de fonctionnement (p_{b_max}) correspondant à la pression maximale avec laquelle le dispositif de remplissage (1) remplit le réservoir (2, 2a, 2b), et la bouteille sous pression (6, 6a, 6b) pouvant être reliée fonctionnellement au réservoir (2, 2a, 2b), la conduite (4) comprenant une conduite de réservoir de stockage (41) destinée à relier le réservoir (2) au réservoir de stockage (3), ainsi qu'une conduite de bouteille sous pression (42) destinée à relier le réservoir (2) à la bouteille sous pression (6), le procédé comprenant les étapes suivantes :
1) Connexion de la conduite (4) du dispositif de remplissage (1) à un réservoir (2, 2a, 2b),
2) Exécution d'une impulsion de pression dans le cas où :
a) Réservoir de stockage (3) avec un système de capteurs
i. Mesure de la pression au moyen du capteur de pression (31) dans le réservoir de stockage (3) et comparaison de la pression (p_{D}) dans le réservoir de stockage (3) avec la pression maximale de fonctionnement (p_{b_max}),
ii. Commande de la conduite (4), notamment la conduite de réservoir de stockage (41), lorsque la pression (p_{D}) dans le réservoir de stockage (3) est supérieure à la pression maximale de fonctionnement (p_{b_max}), et exécution d'une impulsion de pression (8) à la pression maximale de fonctionnement (p_{b_max}) au moyen d'une substance gazeuse sous pression (p_{D}) provenant du réservoir de stockage (3), ou
iii. Commande de la conduite (4), notamment la conduite de bouteille sous pression (42), lorsque la pression (p_{D}) dans le réservoir de stockage (3) est égale ou inférieure à la pression maximale de fonctionnement (p_{b_max}), et exécution d'une impulsion de pression (8) à la pression maximale de fonctionnement (p_{b_max}) au moyen d'une substance gazeuse provenant de la bouteille sous pression (6),
ou
b) Réservoir de stockage (3) sans système de capteurs
iv. Exécution d'une impulsion de pression à la pression maximale de fonctionnement (p_{b_max}) au moyen d'une substance gazeuse provenant de la bouteille sous pression (6),
3) Détermination de la pression initiale (pₛₜₐᵣₜ) destinée au remplissage du réservoir
(2, 2a, 2b),
4) Réalisation d'un test d'étanchéité (10) à la pression initiale (pₛₜₐᵣₜ),
5) Sélection de la rampe de remplissage (11) destinée au remplissage du réservoir
(2, 2a, 2b),
6) Remplissage du réservoir (2, 2a, 2b) avec la rampe de remplissage (11) sélectionnée, à partir du réservoir de stockage (3) par la conduite (4).

10. Procédé selon la revendication 9,
**caractérisé en ce que**
la pression maximale de fonctionnement (p_{b_max}) est comprise entre 800 et 1200 bar, de préférence entre 900 et 1000 bar, et à une température comprise entre -45 °C et 80 °C.

11. Procédé selon la revendication 9 ou 10,
**caractérisé en ce que**
pour connecter la conduite (4) au réservoir (2, 2a, 2b), une vanne de raccord de remplissage côté conduite (43) est reliée fonctionnellement à une vanne de raccord de remplissage côté consommateur (44).

12. Procédé selon l'une des revendications 9 à 11,
**caractérisé en ce que**
des données sont échangées via une interface électronique (45) entre la vanne de raccord de remplissage côté conduite (43) et la vanne de raccord de remplissage côté consommateur (44), les données au moyen desquelles la pression initiale (pₛₜₐᵣₜ) est déterminée.

13. Procédé selon l'une des revendications 9 à 12,
**caractérisé en ce que**
la pression initiale (pₛₜₐᵣₜ) est déterminée au moyen de l'impulsion de pression (8) utilisée pour l'interrogation de pression.

14. Procédé selon l'une des revendications 9 à 13,
**caractérisé en ce que**
après le remplissage d'un réservoir (2, 2a), un autre réservoir (2, 2b, 2c) est rempli immédiatement après.
